# EUROPÄISCHE PATENTSCHRIFT

(11) **EP 0 334 021 B1**
(45) Veröffentlichungstag und Bekanntmachung des Hinweises auf die Patenterteilung: **05.05.1993**
(21) Anmeldenummer: 89102788.0
(22) Anmeldetag: 17.02.1989
(51) Int. Cl.: B60D 1/02

(54) **Vorrichtung zum Ausschalten des Spiels zwischen Kupplungsteilen einer Anhängerkupplung**
Device for taking up play between the coupling parts of a trailer hitch
Dispositif pour rattraper le jeu entre les éléments d'accouplement d'un attelage de remorque

(30) Priorität: 21.03.1988 DE 3809434
(43) Veröffentlichungstag der Anmeldung: 27.09.1989
(73) Patentinhaber: ROCKINGER Spezialfabrik für Anhängerkupplungen GmbH & Co., D-80904 München (DE)
(72) Erfinder: Glässner, Ralf, Dipl.-Ing., D-8000 München 50 (DE); Raaber, Alfons, D-8000 München 45 (DE)
(74) Vertreter: Weickmann, Heinrich, Dipl.-Ing.

(56) Entgegenhaltungen:
- DE-B- 2 502 944
- DE-C- 2 529 303
- FR-A- 2 452 394
- PATENT ABSTRACTS OF JAPAN, Band. 5, Nr. 155 (M-90)[827], 30. September 1981; & JP-A-56 82 612 (TOUKIYUU SHIYARIYOU SEIZOU K.K.) 06-07-1981

## Beschreibung

Die Erfindung betrifft eine Vorrichtung zum Aus- und Einschalten des Spiels zwischen den miteinander zu verbindenden Kupplungsteilen, z. B. Kupplungsbolzen und Zugöse, einer Anhängerkupplung, umfassend einen in einem Zylinder beweglichen Kolben und einen von diesem Kolben beaufschlagten Anlagekörper, welcher während des Fahrbetriebs unter der Wirkung des in einem gegen Abfluß gesperrten, gegebenenfalls jedoch gegen Überdruck gesicherten Hochdruckzylinderraum enthaltenen, an dem Kolben anliegenden hydraulischen Druckmittels die Kupplungsteile in spielfreier gegenseitiger Anlage hält, wobei der Kolben in Richtung der Spielausschaltung antreibbar ist und der sich bei der Spielausschaltung vergrößernde Hochdruckzylinderraum aus einer hydraulischen Druckmittelversorgung nachfüllbar ist und wobei der Hochdruckzylinderraum zur Freigabe des Anlagekörpers entleerbar ist. Derartige Vorrichtungen sind aus der DE-A 25 02 944, der DE-A 25 29 303 und der DE-A 29 12 277 bekannt.

Bei den bekannten Einrichtungen ist der Kolben jeweils durch eine Feder in Richtung der Spielausschaltung vorgespannt. Unter der Wirkung dieser Vorspannfeder entsteht bei Bewegung des Kolbens in Richtung Spielausschaltung ein Unterdruck in dem Hochdruckzylinderraum. Durch diesen Unterdruck in dem Hochdruckzylinderraum wird hydraulisches Druckmittel aus einem Druckmittelvorratsraum in den Hochdruckzylinderraum nachgesaugt. Andererseits liegt der Kolben auf der vom Hochdruckzylinderraum abgelegenen Seite an Atmosphäre an, selbst wenn er durch Schmutzabdeckmittel abgedeckt ist. Die Dichtung zwischen dem Kolben und dem Hochdruckzylinderraum ist insbesondere darauf abgestellt, dem Hochdruck des Druckmittels in dem Hochdruckzylinderraum standzuhalten, wenn im Schubbetrieb der Kolben in Richtung Verkleinerung des Hochdruckzylinderraums beaufschlagt wird. Die Aufrechterhaltung dieses Hochdrucks ist mit herkömmlichen Dichtungsmitteln kein schwerwiegendes Problem. Problematisch wird die Gestaltung der Dichtungsmittel aber dann, wenn diese gleichzeitig eine Abdichtung zwischen der Atmosphäre und dem Hochdruckzylinderraum bewirken müssen, dann nämlich, wenn in dem Hochdruckzylinderraum ein Unterdruck aufgebaut wird. Dann ist die Gefahr eines Einleckens von Luft über die Dichtung hinweg in den Hochdruckzylinderraum nicht auszuschließen. Luft in dem Hochdruckzylinderraum bedeutet aber, daß die Spielausschaltungsfunktion nicht mehr in ausreichendem Maße gewährleistet ist.

Der Erfindung liegt die Aufgabe zugrunde, eine Vorrichtung gattungsgemäßer Art so auszubilden, daß die Möglichkeit von Lufteinlecken in den Hochdruckzylinderraum bei dessen Vergrößerung weitestgehend unterdrückt ist.

Zur Lösung dieser Aufgabe wird erfindungsgemäß vorgeschlagen, daß der Kolben durch Druckgabe von der Druckmittelversorgung her in Richtung der Spielausschaltung antreibbar ist.

Bei dieser Lösung besteht in der Phase der Vergrößerung des Hochdruckzylinderraums in diesem stets ein Überdruck gegenüber dem atmosphärischen Druck, so daß ein Einlecken von Luft in den Hochdruckzylinderraum weitestgehend ausgeschlossen ist. Weiterhin wird durch den Erfindungsvorschlag das Freiwerden von im hydraulischen Druckmittel gelöster Luft beim Eintritt in den auf Unterdruck gestellten Hochdruckzylinderraum unterdrückt. Vielmehr wird etwaige in dem hydraulischen Druckmittel gelöste Luft beim Eintritt in den unter erhöhtem Druck stehenden Hochdruckzylinderraum in Lösung gehalten.

Die erfindungsmäße Ausbildung läßt sich grundsätzlich in der Weise verwirklichen, daß der Hochdruckzylinderraum über ein entsprechendes Schaltventil mit einer zentralen hydraulischen Druckmittelversorgung des die Kupplung tragenden Fahrzeugs verbunden wird. Bevorzugt sieht man aber an der Vorrichtung einen von einer solchen zentralen hydraulischen Druckmittelversorgung unabhängigen Druckmittelvorratsraum vor, der mit dem Hochdruckzylinderraum zu dessen Nachfüllung und Entleerung verbindbar ist, wobei der in diesem Hochdruckmittelvorratsraum herrschende Druck des hydraulischen Druckmittels von außen her beeinflußbar ist, also insbesondere erhöhbar ist, wenn der Kolben in Richtung Spielausschaltung verschoben werden soll. Da an modernen Kraftfahrzeugen der hier infrage kommenden Art ohnehin in der Regel eine zentrale Druckluftversorgung vorhanden ist, erweist es sich als vorteilhaft, wenn der in dem Druckmittelvorratsraum herrschende Druck durch Beaufschlagung mit Druckluft beeinflußt wird.

Wenn zu der erfindungsgemäßen Vorrichtung gesagt wird, daß der Hochdruckzylinderraum während des Fahrbetriebs gegen Abfluß gesperrt ist, so soll dies nicht ausschließen, daß eine geringe Lackage von dem Hochdruckzylinderraum zur hydraulischen Druckmittelversorgung hin auch schon vor dem Ansprechen eines etwa vorhandenen Überdruckventils stattfinden kann. Eine solche Leckage könnte sogar Vorteile bringen, dann nämlich, wenn die Kupplung gegenüber dem Fahrzeug gefedert ist, die den Zylinder umfassende Hydraulikeinheit aber starr am Fahrzeug angebracht ist. Dann könnte durch Axialschwingungen der Kupplung gegenüber dem Fahrzeug und damit gegenüber dem Hochdruckzylinder eine progressive Druckerhöhung in dem Hochdruckzylinderraum durch eine Art Pumpwirkung eintreten. Um diese Druckerhöhung kontinuierlich abzubauen und den Druck nicht erst bis zum Ansprechen des Überdruckventils ansteigen zu lassen, könnte die erwähnte Leckagemöglichkeit helfen. Die Bemessung der Leckage ist dabei relativ unkritisch, da ein zu starker Abfluß von hydraulischem Druckmittel ja ständig durch das unter Druck nachströmende hydraulische Druckmittel aus der Druckmittelversorgung wieder ausgeglichen wird, wenn im Zuge eines Lastwechsels eine Zugbeanspruchung der Kupplung eintritt.

Beeinflußt man den Druck innerhalb des Druckmittelvorratsraums durch Beaufschlagung mit Druckluft, so empfiehlt es sich, daß in dem Druckmittelvorratsraums durch eine bewegliche Trennwand getrennt eine Druckmittelkammer und eine Luftkammer vorgesehen sind, wobei die Luftkammer an eine Druckluftversorgung anschließbar ist. Dadurch kann man den Luftgehalt des Druckmittels und auch den Gehalt an gelöster Luft begrenzen, was wiederum vorteilhaft ist im Hinblick auf die angestrebte weitgehende Luftfreiheit des in dem Hochdruckzylinderraums enthaltenen hydraulischen Druckmittels. Die Trennwand kann dabei von einer Rollmembran gebildet sein, wobei man zur Schonung der Rollmembran eine Führungseinrichtung vorsehen kann.

Zur Nachfüllung des Hochdruckzylinderraums bei Spielausschaltung kann zwischen dem Hochdruckzylinderraum und dem Vorratsraum ein zum Hochdruckzylindrraum hin öffnendes, ggf. in Schließrichtung vorgespanntes Nachfüllventil vorgesehen sein. Dieses Nachfüllventil kann grundsätzlich ohne Vorspannung ausgeführt werden. Aus Gründen einer gesicherten Absperrung bei Schubbeanspruchung der Kupplung empfiehlt es sich jedoch, daß das Nachfüllventil in Schließrichtung vorgespannt ist.

Um in Vorbereitung eines Auskuppelns die Druckbeaufschlagung des Kolbens und damit des Anlagekörpers abstellen zu können, sieht man zwischen dem Hochdruckzylinderraum und dem Druckmittelvorratsraum ein gesteuertes Entleerungsventil vor. Die Steuerung dieses Entleerungsventils kann grundsätzlich auf beliebige Weise erfolgen. Man wird aber zweckmäßigerweise dafür sorgen, daß die Öffnung des Entleerungsventils in zwangsläufigem Zusammenhang mit der Vorbereitung des Auskuppelns geschieht. Erfolgt die Abkupplung des Anhängers von dem Zugfahrzeug durch Schwenken eines Kupplungsbetätigungshebels, wie dies regelmäßig der Fall ist, so kann man dafür sorgen, daß bereits während eines noch nicht zur Abkupplung führenden Vorlaufwegs des Kupplungsbetätigungshebels das Entleerungsventil geöffnet wird. Dabei kann man auch dafür sorgen, daß das Entleerungsventil in zeitlichem Zusammenhang mit dem Druck in dem Druckmittelvorratsraum gesteuert ist derart, daß bei Druckabbau in dem Druckmittelvorratsraum das Entleerungsventil öffnet. Eine besonders einfache Art der Steuerung erhält man dadurch, daß man das Entleerungsventil durch den Druck des hydraulischen Druckmittels in dem Druckmittelvorratsraum steuert. Angewendet auf den Fall, daß ein Kupplungsbetätigungshebel vorgesehen ist, braucht man dann nur während eines Vorlaufwegs des Kupplungsbetätigungshebels den Druck in dem Druckmittelvorratsraum abzubauen und erreicht damit gleichzeitig die Öffnung des Entleerungsventils, sobald der Druck des hydraulischen Druckmittels abgebaut wird.

Es kann nicht ausgeschlossen werden, daß der Druck in dem Hochdruckzylinderraum während des Fahrbetriebs etwa bei ungewöhnlicher Positionierung der Zugdeichsel des Nachlauffahrzeugs relativ zur Kupplung des Zugfahrzeugs einen überhöhten Wert annimmt, indem der Anlagekörper durch die Zugöse weiter zurückgeschoben wird als unter normalen Umständen zu erwarten. Um dann einen Überdruck in dem Hochdruckzylinder zu verhindern, der zur Zerstörung der Hydraulikeinheit der Kupplung führen könnte, empfiehlt es sich, daß an den Hochdruckzylinderraum ein erstes Überdruckventil angeschlossen ist. Dieses erste Überdruckventil kann jedenfalls dann, wenn der Druckmittelvorratsraum von äußeren Druckmittelversorgungssystemen unabhängig ist, zu dem Druckmittelvorratsraum hin öffnen.

Auch in dem Druckmittelvorratsraum kann, jedenfalls dann, wenn dieser von äußeren Druckmittelversorgungssystemen unabhängig ist, die Gefahr eines Überdrucks auftreten, etwa dann, wenn der Druckmittelvorratsraum durch Unbedachtheit zu weitgehend aufgefüllt worden ist und dann möglicherweise der Kolben vermittels des Anlagekörpers etwa wegen extremer Einstellung des Nachlauffahrzeugs zum Zugfahrzeug ungewöhnlich weit zurückgeschoben wird. Um in einem solchen Fall den Aufbau eines überhöhten und ggf. zu Zerstörungen führenden Drucks in dem Druckmittelvorratsraum zu verhindern, empfiehlt es sich, daß an den Druckmittelvorratsraum ein zweites Überdruckventil angeschlossen ist. Das zweite Überdruckventil kann beispielsweise in eine Druckluftversorgung des Druckmittelvorratsraums öffnen, so daß überschüssiges Druckmittel bei Öffnen des Überdruckventils aus dem Druckmittelvorratsraum in diese Druckluftversorgung ausgeblasen wird.

Um beim Öffnen der Kupplung eine zwangsläufige Abhebung des Anlagekörpers von den miteinander zu verbindenden Kupplungsteilen zu bewirken, kann man den Kolben durch Rückstellmittel entgegen der Wirkung der Spielausschaltung vorspannen, so daß beim Zusammenbruch des Drucks in dem Druckmittelvorratsraum der Anlagekörper zwangsläufig von den miteinander zu verbindenden Kupplungsteilen abhebt.

Um etwaige in den Hochdruckzylinderraum eingedrungene Luft für die Außerspielsetzungsfunktion unschädlich zu machen, wird empfohlen, daß der Kolben entgegen der Richtung der Spielausschaltung bis zur wenigstens annähernd vollständigen Entleerung des Hochdruckzylinderraums zurückstellbar ist. Dies bedeutet, daß der Hochdruckzylinderraum bei jeder Öffnung der Kupplung wenigstens annähernd vollständig entleert wird. In ihm enthaltene Luft entweicht dann in den Druckmittelvorratsraum, wo sie sich in Form einer Luftblase ansammeln kann. Dort ist die Luftblase unschädlich, denn sie sammelt sich in den höchstgelegenen Bereichen des Druckmittelvorratsraums an, während man das Nachfüllventil tiefer legt: dann kann die in der Blase gesammelte Luft nicht wieder in den Hochdruckzylinderraum einströmen. Die Rückstellmittel, welche den Kolben entgegen der Richtung der Spielausgestaltung vorspannen, sorgen dann im Laufe des Betriebs für eine wiederholte Entlüftung des Hochdruckzylinderraums.

Um Seitenkräfte und Momente auf den Kolben als Folge von Kraftübertragung zwischen Anlagekörper und Kolben zu verhindern, empfiehlt es sich, daß zwischen dem Kolben und dem Anlagekörper ein Druckstab angeordnet ist, welcher an beiden Enden mittels je eines Kugelgelenks an dem Kolben bzw. dem Anlagekörper angreift. Dies hat einen vorteilhaften Effekt auf die Dichtungsmittel, die zwischen Kolben und Zylinder angeordnet sind, und gibt zusätzliche Sicherheit gegen Eindringen von Luft aus der Atmosphäre in den Hochdruckzylinderraum.

Um das Eindringen von Schmutz in den Hochdruckzylinderraum und insbesondere in den Bereich der Dichtungen zu verhindern, empfiehlt es sich, daß der von dem Hochdruckzylinderraum abgelegene Raum des den Kolben aufnehmenden Zylinders durch Abdeckmittel abgedeckt ist.

Sind die Kugelgelenke zwischen dem Kolben und dem Anlagekörper so ausgebildet, daß Teile von ihnen voneinander abheben können, so kann für die Fluchthaltung des Druckstabs dadurch gesorgt werden, daß der Druckstab an dem Zylinder durch die Axialbewegung des Druckstabs gestattende Stützmittel annähernd in Achsrichtung des Kolbens gehalten ist.

Die Abdeckung und die Stützmittel können miteinander kombiniert werden, in der Weise, daß der Zylinder an seinem vom Hochdruckzylinderraum abgelegenen Ende durch eine Kappe abgedeckt ist, welche mit einem den Druckstab stützenden und diesen staubdicht umschließenden Balgen verbunden ist.

Wie weiter oben schon erwähnt, kann zwischen dem Hochdruckzylinderraum und der hydraulischen Druckmittelversorgung eine Leckageverbindung bestehen, insbesondere dann, wenn der Zylinder an dem jeweils zugehörigen Fahrzeug starr und der Kupplungskörper an diesem Fahrzeug axial gefedert angebracht ist.

Die beiliegenden Figuren erläutern die Erfindung anhand eines Ausführungsbeispiels. Es stellen dar:
- Fig. 1: einen Längsschnitt durch eine Kupplung mit erfindungsgemäßer Vorrichtug zur Spielausschaltung;
- Fig. 2: einen Schnitt durch eine Hydraulikeinheit der erfindungsgemäßen Vorrichtung (Längsschnitt durch den in Fig. 1 rechtsgelegenen Teil der Vorrichtung);
- Fig. 3: eine Draufsicht zu Fig. 2 in Pfeilrichtung III der Fig. 2 und
- Fig. 4: eine Endansicht zu Fig. 2 in Pfeilrichtung IV der Fig. 2.

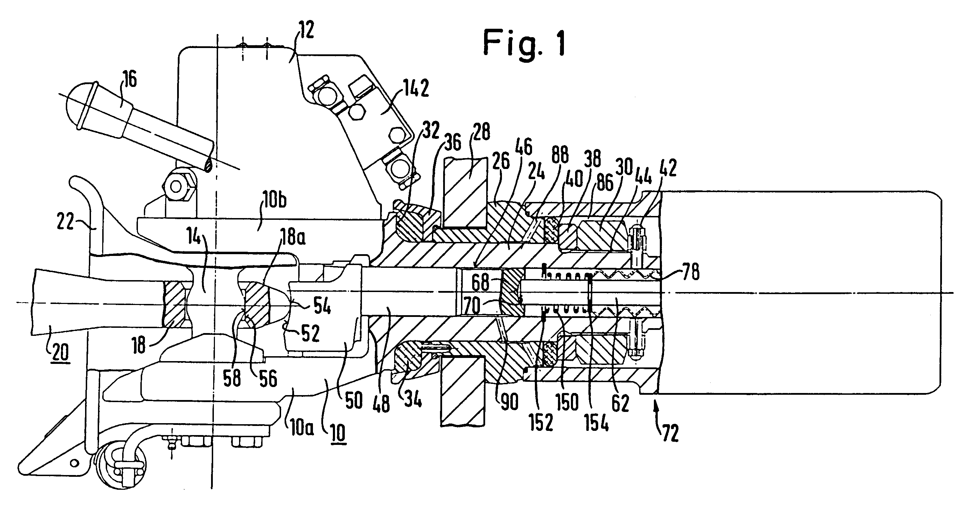

In Fig. 1 erkennt man einen Kupplungskörper, der ganz allgemein mit 10 bezeichnet ist. Dieser Kupplungskörper 10 umfaßt einen unteren Schenkel 10a und einen oberen Schenkel 10b. Auf dem oberen Schenkel 10b ist das Gehäuse 12 einer Kupplungsautomatik angeordnet. Zu dieser Kupplungsautomatik gehört ein Kupplungsbolzen 14, welcher durch nicht eingezeichnete Bohrungen der Schenkel 10a und 10b geführt ist. Dieser Kupplungsbolzen 14 befindet sich in Figur 1 in der Stellung "eingekuppelt" und kann durch Betätigen eines Betätigungshebels 16 nach oben zurückgezogen werden. Der Kupplungsbolzen 14 durchsetzt eine Zugöse 18 einer Anhängerdeichsel 20. Durch Einführen der Zugöse 18 in den Kupplungskörper 10 vermittels eines das Einführen erleichternden Kupplungsmauls 22 kann die Zugöse 18 in Flucht mit dem nach oben zurückgezogenen Kupplungsbolzen 14 gebracht werden. Der Kupplungsbolzen 14 wird dabei durch die Schrägfläche 18a der Zugöse 18 leicht angehoben und kann dann in die in Figur 1 gezeichnete Stellung herabfallen, in welcher er die Zugöse 18 durchsetzt und die Kupplung zwischen einem den Kupplungskörper 10 tragenden Zugfahrzeug und einem die Anhängerdeichsel 20 tragenden Anhänger herstellt. Der Aufbau solcher Anhängerkupplungen ist bekannt. Wie aus Figur 1 zu ersehen, besteht zwischen der Zugöse 18 und dem Kupplungsbolzen 14 ein gewisses Spiel. Dieses Spiel ist unvermeidbar, um das Einkuppeln zu ermöglichen und während der Fahrt gewisse Bewegungen der Anhängerdeichsel 20 gegenüber dem Kupplungskörper 10 zu ermöglichen. Andererseits besteht zur Vermeidung von Schlägen zwischen dem Kupplungsbolzen 14 und der Zugöse 18 ein Bedarf, das Spiel möglichst weitgehend zu unterdrücken. Die Unterdrückung dieses Spiels ist aus der DE- OS 25 02 944 , der DE-OS 25 29 303 und der DE-OS 29 12 277 an sich bekannt. Mit dieser Spielunterdrückung befaßt sich auch die vorliegende Erfindung.

Der Kupplungskörper 10 weist eine Zugstange 24 auf. Diese Zugstange 24 ist in einem Zugstangenlager 26 gelagert, welches an einer Traverse 28 des Zugfahrzeugs angeflanscht ist. Die Zugstange 24 ist mit dem Zugstangenlager 26 durch eine Zugstangenmutter 30 verspannt. Diese Zugstangenmutter 30 zieht eine Schulterfläche 32 der Zugstange 24 gegen einen druckelastischen Abstützring 34, der sich über einen Teller 36 an dem in der Figur 1 linken Ende des Zugstangenlagers 26 abstützt. Die Zugstangenmutter 30 liegt über Zwischenringe 38 und 40 an dem in Figur 1 rechten Ende des Zugstangenlagers 26 an und ist durch eine Verschraubungssicherung 42 gegen Lösen von dem Gewinde 44 der Zugstange 24 gesichert. Der Zwischenring 40 ist aus kompressiblem Werkstoff hergestellt, so daß die Zugstange 24 in beiden Richtungen elastisch an dem Zugstangenlager 26 festgestellt ist.
Die Zugstange 24 ist mit einer Zugstangenbohrung 46 ausgeführt. In der Zugstangenbohrung 46 ist eine Führungsstange 48 verschiebbar geführt, welche an ihrem in der Figur 1 linken Ende einen Anlagekörper 50, auch "Stop-Prisma" genannt, trägt. Dieser Anlagekörper 50 ist dazu bestimmt, mit einer Anlagefläche 52 gegen eine Gegenanlagefläche 54 der Zugöse 18 zur Anlage zu kommen und die Zugöse 18 mit einem Teilbereich 56 ihrer Innenumfangsfläche gegen einen Teilbereich 58 der Außenumfangsfläche des Kupplungsbolzens 14 anzudrükken, so daß das Spiel zwischen dem Kupplungsbolzen 14 und der Zugöse 18 im Fahrbetrieb unterdrückt ist.

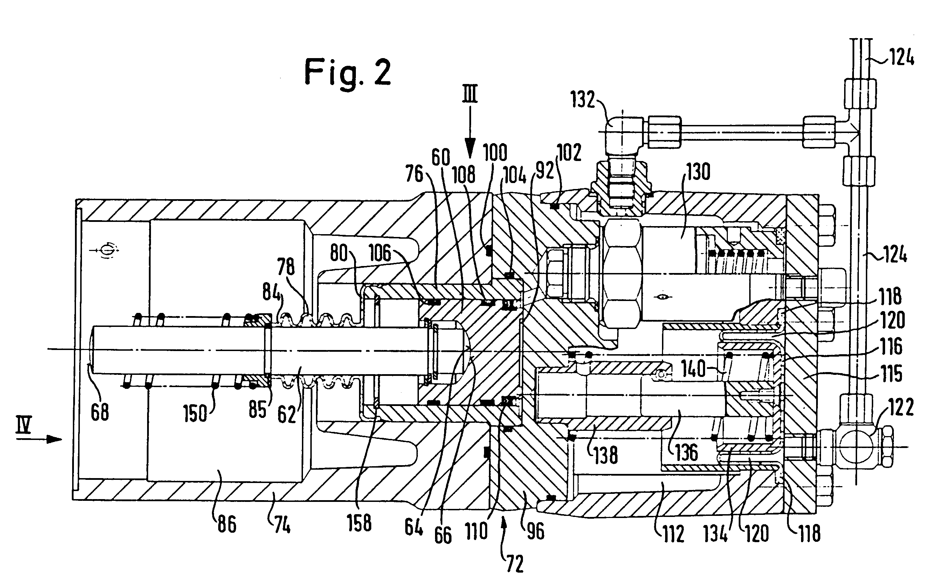

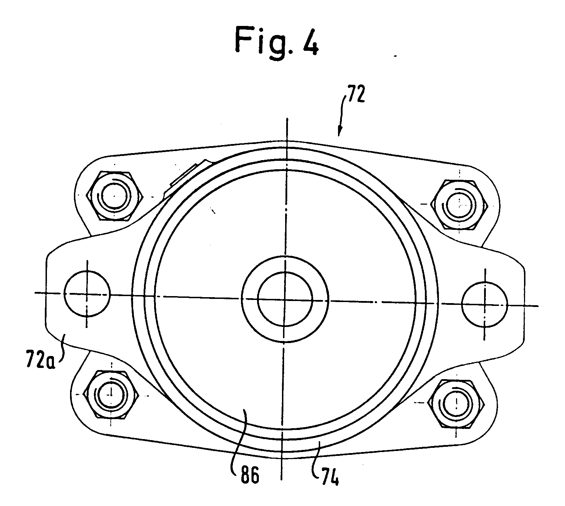

An der Führungsstange 48 greift ein Kolben 60 (in Fig. 2 dargestellt) an, und zwar über einen Druckstab 62. Der Druckstab 62 weist an seinem in Fig. 1 rechten Ende eine Teilkugelfläche 64 auf, welche in eine Kugelpfanne 66 des Kolbens 60 eingreift, und an seinem linken Ende eine Teilkugelfläche 68, welche in eine Kugelpfanne 70 der Führungsstange 48 eingreift. Durch Kraftausübung auf den Kolben 60 nach links wird die Führungsstange 48 nach links verschoben und der Anlagekörper 50 zur Anlage gegen die Zugöse 18 gebracht. Der Kolben 60 ist in einer Hydraulikeinheit 72 in noch näher zu beschreibender Weise untergebracht. Die Hydraulikeinheit 72 ist mittels eines Flansches 72a an dem Zugstangenlager 26 befestigt (Fig. 4).

Der Kolben 60 ist in einem Zylinder 76 geführt, welcher starr innerhalb der Hydraulikeinheit 72 angeordnet ist. Das Zugstangenlager 26 ist starr an der Traverse 28 angeordnet. Der Zylinder 76 liegt damit gegenüber dem Zugstangenlager 26 fest. Die Zugstange 24 ist von der Kupplungsherstellung her gegenüber dem Zugstangenlager 26 zentriert und die Führungsstange 48 ist gegenüber der Zugstange 24 zentriert. Gleichwohl sind gewisse Fluchtungsfehler der Führungsstange 48 gegenüber der Zugstange 24 und insbesondere der Zugstange 24 gegenüber dem Zugstangenlager 26 nicht auszuschließen, insbesondere nach längerem Gebrauch der Kupplung. Andererseits ist, wie gesagt, der Zylinder 76 gegenüber dem Zugstangenlager 26 starr festgelegt. Fluchtungsfehler der Führungsstange 48 gegenüber dem Zugstangenlager 26 bedeuten also auch Fluchtungsfehler der Führungsstange 48 gegenüber dem Zylinder 76. Um nun zu verhindern, daß Fluchtungsfehler zwischen der Führungsstange 48 und dem Zylinder 76 zu Verklemmungen zwischen dem Kolben 60 und dem Zylinder 76 führen, ist zwischen der Führungsstange 48 und dem Kolben 60 der Druckstab 62 zwischengeschaltet, welcher über das Kugelgelenk 64, 66 mit dem Kolben 60 in Druckverbindung steht und über das Kugelgelenk 68, 70 mit der Führungsstange 48 in Druckverbindung steht. Dank dieser Kugelgelenke 64, 66 und 68, 70 zentriert sich der Druckstab 62 selbsttätig zwischen dem Kolben 60 und der Führungsstange 48. Es kann also keine Klemmwirkung zwischen dem Kolben 60 und dem Zylinder 76 eintreten.

Ein Balgen 78 ist einerseits einstückig mit einer Kappe 80 des Zylinders 76 ausgeführt. Andererseits umschließt der Balgen 78 mit seinem linken Ende bei 84 den Druckstab 62 und ist durch einen Sprengring 85 an dem Druckstab 62 festgelegt. Dadurch ist der Druckstab 62 auch dann durch den Balgen 78 in Fluchtlage zu dem Kolben 60 und zu der Führungsstange 48 gehalten, wenn der Druckstab 62 mit dem Kolben 60 oder der Führungsstange 48 nicht mehr in druckübertragendem Eingriff steht. Der Balgen 78 kann an der Innenumfangsfläche der Zugstangenbohrung 46 anliegen, wie in Fig. 1 dargestellt, so daß der Balgen 78 unabhängig von seiner Biegefestigkeit den Druckstab 62 in Fluchtlage zu dem Kolben 60 und zu der Führungsstange 48 sichert. Darüberhinaus übernimmt der Balgen 78 eine Abdichtfunktion für den Innenraum des Zylinders 76, indem er einmal mit der Kappe 80 schmutzdichtend zusammenhängt und andererseits bei 84 an dem Druckstab 62 schmutzdichtend anliegt. Der Raum 86 innerhalb eines Zwischengehäuses 74 ist mit Fett gefüllt, das über Kanäle 88, 90 auch die Führung der Zugstange 24 in dem Zugstangenlager 26 und die Führung der Führungsstange 48 in der Zugstangenbohrung 46 schmiert. Dieses Fett ist durch die Kappe 80 am Eindringen in den Innenraum des Zylinders 76 gehindert.

In Fig. 2 erkennt man die Einzelheiten der Vorrichtung innerhalb der Hydraulikeinheit 72:
Der Zylinder 76 ist, wie aus Fig. 2 zu ersehen, innerhalb der Hydraulikeinheit 72 aufgenommen und nimmt seinerseits den Kolben 60 auf. Der Kolben 60 bildet innerhalb des Zylinders auf der in Fig. 2 rechts gelegenen Seite des Kolbens einen Hochdruckzylinderraum 92. Der Hochdruckzylinderraum 92 ist an der linken Seite einer Platte 96 gebildet, welche mit dem Zwischengehäuse 74 und einem Teilgehäuse 98 zusammengeflanscht ist. Eine Dichtung 100 dichtet die Platte 96 gegenüber dem Zwischengehäuse 74 ab; eine Dichtung 102 dichtet das Teilgehäuse 98 gegenüber der Platte 96 ab. Der Zylinder 76 ist gegenüber der Platte 96 durch eine Dichtung 104 abgedichtet. Der Kolben 60 ist in dem Zylinder 76 durch Gleitführungen 106 und 108 geführt und durch eine Hochdruckdichtung 110 abgedichtet.

Innerhalb des Teilgehäuses 98 auf der rechten Seite der Platte 96 ist ein hydraulischer Druckmittelvorratsraum 112 untergebracht. Dieser Druckmittelvorratsraum 112 ist am rechten Ende des Teilgehäuses 98 teilweise durch eine Abschlußplatte 115, teilweise durch eine Rollmembran 116 abgedeckt. Die Rollmembran 116 ist mit einem Flansch 118 dicht an der Abschlußwand 115 eingespannt, so daß sich zwischen dem Rollbalgen 116 und der Abschlußplatte 115 ein Luftraum 120 bildet. Der Luftraum 120 ist über eine Verschraubung 122 mit einer Druckluftzuführungsleitung 124 verbunden. Die Druckluftzuführungsleitung 124 führt zu einer zentralen Druckmittelversorgung des Fahrzeugs, an welchem der Kupplungskörper 10 angebracht ist, beispielsweise zu der Druckmittelversorgung, die zur Bremsbetätigung dieses Fahrzeugs dient. Der Druckmittelvorratsraum 112 ist mit hydraulischem Druckmittel, insbesondere mit wintergeeignetem Hydrauliköl gefüllt.

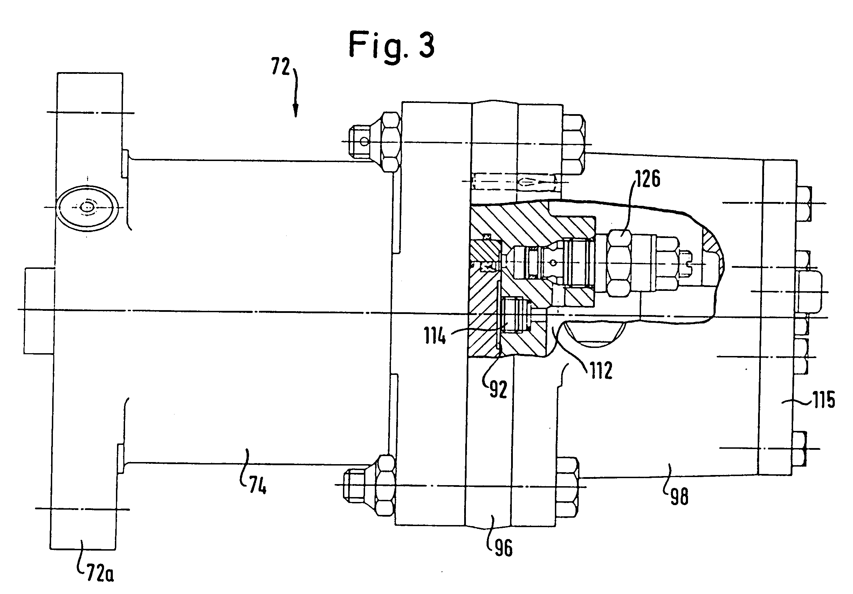

Von dem Druckmittelvorratsraum 112 führt, wie in Fig. 3 dargestellt, ein Nachfüllventil 114 zu dem Hochdruckzylinderraum 92. Das Nachfüllventil öffnet unter einem in dem Druckmittelvorratsraum 112 herrschenden Druck in Richtung zu dem Hochdruckzylinderraum 92 hin und ist in Schließrichtung vorgespannt. Ferner ist zwischen dem Druckmittelvorratsraum 112 und dem Hochdruckzylinderraum 92 ein Entleerungsventil 126 angeordnet. Dieses Entleerungsventil 126 ist über einen Kanal 128 dem Druck in dem Druckmittelvorratsraum 112 ausgesetzt und öffnet, wenn der Druck in dem Druckmittelvorratsraum 112 unter ein vorbestimmtes Maß abfällt, so daß dann Druckmittel von dem Hochdruckzylinderraum 92 in den Druckmittelvorratsraum 112 überströmen kann.

Weiterhin ist, wie in Fig. 2 dargestellt, der Hochdruckzylinderraum 92 mit dem Druckmittelvorratsraum 112 durch ein erstes Überdruckventil 130 verbunden. Dieses Überdruckventil 130 öffnet bei Überschreiten eines vorbestimmten Drucks in dem Hochdruckzylinderraum 92 und läßt dann Druckmittel aus dem Hochdruckzylinderraum 92 in den Druckmittelvorratsraum 112 austreten.

An den Druckmittelvorratsraum 112 ist schließlich ein zweites Überdruckventil 132 angeschlossen, welches bei Auftreten eines vorbestimmten Drucks in dem Druckmittelvorratsraum 112 in die Druckluftzuführungsleitung 124 öffnet.

Die Druckluftzuführungsleitung 124 wird von dem Druckluftversorgungssystem aus über ein Schaltventil 142 gesteuert, welches von der Stellung des Handbetätigungshebels 16 in Fig. 1 aus betätigt wird.

In dem Zustand der Fig. 1 liegt die Druckluftzuführungsleitung 124 an Druckluft. Diese Druckluft setzt sich über die Verschraubung 122 fort und erzeugt Luftdruck in dem Luftraum 120. Der Luftdruck in dem Luftraum 120 überträgt sich auf den Druckmittelvorratsraum 112, so daß dieser unter entsprechendem Druck steht. Hier ist anzumerken, daß die Rollmembran 116 durch einen Führungskolben 134 geführt ist; dieser Führungskolben 134 ist seinerseits durch einen Führungsbolzen 136 in einer Führungshülse 138 geführt, welche in der Zwischenplatte 96 befestigt ist. Eine Schraubendruckfeder 140 wirkt auf den Führungskolben 134 ein, so daß der Druck des Druckmittels in dem Druckmittelvorratsraum 112 etwas kleiner ist als der Luftdruck in dem Luftraum 120.

### Funktionsweise:

In Fig. 1 ist eingekuppelt. Der Kupplungsbolzen 14 durchsetzt die Zugöse 18. Der Handbetätigungshebel 16 befindet sich in der in Fig. 1 gezeichneten Stellung. Über ein Schaltventil, das ganz allgemein bei 142 dargestellt ist, wird die Druckluftzuführungsleitung 124 mit Druckluft beaufschlagt. Diese Druckluft ist an den Luftraum 120 angeschlossen, so daß in diesem Luftraum Druck herrscht. Durch diesen Luftdruck im Luftraum 120 wird das hydraulische Druckmittel im Druckmittelvorratsraum 112 unter Druck gesetzt, und zwar unter Vermittlung der Rollmembran 116. Der Druck in dem Druckmittelvorratsraum 112 setzt sich über das Nachfüllventil 114 (Fig. 3) fort in den Hochdruckzylinderraum 92. Ferner liegt der Druck in dem Druckmittelvorratsraum 112 über die Bohrung 128 an dem Entleerungsventil 126 an, so daß das Entleerungsventil 126 geschlossen ist. Wenn der Kupplungskörper 10 eine Zugwirkung auf die Anhängerdeichsel 20 ausübt, so ist - wie aus Fig. 1 zu ersehen - das Spiel zwischen den Teilbereichen 56 und 58, der Kupplungsbolzenoberfläche und der Kupplungsöseninnenfläche vollständig aufgebraucht. Der Kolben 60 drückt über den Druckstab 62 und die Führungsstange 48 den Anlagekörper 50 in Eingriff mit der Zugöse 18. Die Kupplung ist damit spielfrei. Der Hochdruckzylinderraum 92 ist vollständig mit hydraulischem Druckmittel gefüllt, da dieses durch das Nachfüllventil 114 unter Druck nachgefüllt ist. Das Entleerungsventil 126 ist geschlossen. Wenn nun das Zugfahrzeug bremst und das angehängte Fahrzeug nachschiebt, so bleibt die Spielfreiheit erhalten, da das hydraulische Druckmittel in dem Hochdruckzylinderraum 92 weder komprimierbar ist noch entweichen kann. Es kann deshalb nicht entweichen, weil das Entleerungsventil 126 durch den Druck in dem Druckmittelvorratsraum 112 geschlossen gehalten wird und weil das Nachfüllventil 114 schließt, sobald der Druck in dem Hochdruckzylinderraum 92 den Druck in dem Druckmittelvorratsraum 112 übersteigt.

Wenn die Kupplung geöffnet werden soll, so wird der Handbetätigungshebel 16 im Uhrzeigersinn von der Stellung der Fig. 1 aus verschwenkt. Bevor die Bewegung des Kupplungsbolzens 14 nach oben beginnt, wird in dem Schaltventil 142 die Verbindung der Druckluftzuführungsleitung 124 mit der zentralen Druckluftversorgung unterbrochen und die Druckluftzuführungsleitung wird mit Atmosphäre verbunden. Damit bricht der Druck in dem Luftraum 120 zusammen und der Druck des hydraulischen Druckmittels in dem Druckmittelvorratsraum 112 bricht ebenfalls zusammen. Dann öffnet sich das Entleerungsventil 126 und das Druckmittel aus dem Hochdruckzylinderraum 92 kann über das Entleerungsventil 126 in den drucklosen Druckmittelvorratsraum 112 entweichen. Der Kolben 60 wird dann durch die Schraubendruckfeder 150 in den Fig. 1 und 2 nach rechts zurückgedrängt, wobei sich der Hochdruckzylinderraum 92 im wesentlichen vollständig entleert. Die Schraubendruckfeder 150 ist, wie in Fig. 1 dargestellt, durch einen Sprengring 152 an der Zugstange 24 abgestützt und wirkt auf einen Sprengring 154 ein, welcher in einer Ringnut des Druckstabs 62 sitzt. Auf diese Weise wird das Spiel zwischen der Zugöse 18 und dem Kupplungsbolzen 14 frei und der Kupplungsbolzen 14 kann infolge der weiteren Verschwenkung des Handbetätigungshebels 16 nach oben gezogen werden.

Beim Einkuppeln fällt der Handbetätigungshebel 16 in die in Fig. 1 gezeichnete Stellung zurück und der Kupplungsbolzen 14 durchdringt wieder die Kupplungsöse 18. Erst dann, wenn der Kupplungsbolzen 14 durch die Kupplungsöse 18 wieder ganz hindurchgetreten ist, wird das Schaltventil 142 wieder umgeschaltet, so daß an der Druckluftzuführungsleitung 124 wieder Luftdruck anliegt. Der Druck in dem Druckmittelvorratsraum 112 reicht in der Regel nicht aus, um die Spielfreiheit zwischen dem Kupplungsbolzen 14 und der Zugöse 18 sicherzustellen. Wenn aber das den Kupplungskörper 10 tragende Zugfahrzeug anfährt und einen Zug auf die Anhängerdeichsel ausübt, so wird das Spiel zwischen der Zugöse 18 und dem Kupplungsbolzen 14 wieder aufgehoben, der Kolben 60 bewegt sich dann unter dem Druck des hydraulischen Druckmittels und gegen die Wirkung der Schraubendruckfeder 150 wieder nach links und der Hochdruckzylinderraum 92 wird vollständig mit hydraulischem Druckmittel aufgefüllt. Dieses hydraulische Druckmittel kann dann nicht mehr entweichen, auch nicht, wenn der Anhänger auf das Zugfahrzeug aufläuft, weil das Entleerungsventil 126 durch den Druck in dem Druckmittelvorratsraum 112 wieder geschlossen ist und das Nachfüllventil 114 sich schließt, wenn in dem Hochdruckzylinderraum 92 ein den Druck in dem Druckmittelvorratsraum 112 übersteigender Druck besteht.

Sollte beim Überführen des Kupplungsbolzens 14 aus der ausgekuppelten Stellung in seine in Fig. 1 dargestellte Stellung eine Zugöse 18 nicht in den Kupplungskörper 10 eingefahren sein, so stößt bei Druckaufbau in dem Druckmittelvorratsraum 112 und damit über das Nachfüllventil 114 auch in dem Hochdruckzylinderraum 92 der Kolben 60 gegen den Sprenring 158 an der Innenseite des Zylinders 76 an.

Wenn der Druckstab 62 drucklos wird, so wird er gleichwohl durch den Faltenbalg 78 in der in Fig. 2 dargestellten Stellung gehalten, so daß die Kugelgelenke 64, 66 und 68, 70 bei erneuter Druckbeaufschlagung des Druckstabs 62 jederzeit wieder in Achsrichtung des Geräts wirksam werden.

Da der Faltenbalg 78 mit der Schmutzkappe 80 einstückig hergestellt ist, kann kein Schmutz aus dem Raum 86 in das Innere des Zylinders 76 eintreten, auch kein verschmutztes Fett.

Wenn sich der Hochdruckzylinderraum beim Anlegen von Luftdruck an den Luftraum 120 vergrößert, so geschieht dies durch das nachdrückende Druckmittel aus dem Druckmittelvorratsraum 112, welches durch das Nachfüllventil 114 in den Hochdruckzylinderraum 92 eindringt. Es kann also in dem Hochdruckzylinderraum 92 bei der Verschiebung des Kolbens 60 nach links kein Unterdruck entstehen. Damit besteht auch keine Gefahr, daß atmosphärische Luft über die Hochdruckdichtung 110 hinweg in den Hochdruckzylinderraum 92 eindringt. Auch besteht keine Gefahr, daß gelöste Luft in dem Hochdruckzylinderraum 92 frei wird und in diesem eine Luftblase bildet.

Sollte sich während des Fahrbetriebs in dem Hochdruckzylinderraum 92 ein Überdruck bilden, der über einem vorbestimmten Druck liegt, so öffnet das Überdruckventil 130 und es kann ein Teil des in dem Hochdruckzylinderraum 92 enthaltenen Druckmittels in den Druckmittelvorratsraum 112 entweichen, da der Druck in dem Druckmittelvorratsraum 112 auch bei Anliegen des Luftdrucks in dem Luftraum 120 wesentlich geriner ist als der Druck in dem Hochdruckzylinderraum 92. Damit können keine zerstörenden Kräfte in dem Hochdruckzylinderraum 92 auftreten. Sollte der Druckmittelvorratsraum 112 mit einer zu großen Menge an Druckmittelvorrat gefüllt sein, so könnte bei der Öffnung des Überdruckventils 130 ein Übermäßiger Druck in dem Druckmittelvorratsraum 112 entstehen. Auch durch Bildung einer Luftblase in dem Druckmittelvorratsraum 112 könnte ein solcher Überdruck entstehen. Zur Absicherung gegen einen solchen übermäßigen Druck ist das zweite Überdruckventil 132 vorgesehen, welches dann in die Druckluftzuführungsleitung 124 öffnet, so daß bei der nächsten Verbindung der Druckluftzuführungsleitung mit Atmosphäre das ausgetretene hydraulische Druckmittel in die Atmosphäre ausgeblasen wird.

Beim Öffnen der Kupplung wird der Kolben 60 in die in Fig. 2 dargestellte äußerste rechte Stellung bewegt, in welcher das Volumen des Hochdruckzylinderraums 92 auf annähernd Null reduziert ist. Damit wird etwaige Luft, die - aus welchen Gründen auch immer - in dem Hochdruckzylinderraum 92 eingeströmt sein könnte, durch das Entleerungsventil 126 in den Druckmittelvorratsraum 112 verdrängt. Diese Luft kann sich dann in dem Druckmittelvorratsraum 112 als Luftblase ansammeln, und zwar in dem höchstgelegenen Bereich des Druckmittelvorratsraums 112, welcher oberhalb des Entleerungsventils 126 und insbesondere oberhalb des Nachfüllventils 114 liegt. Auf diese Weise kann diese Luft nicht bei der nächsten Linksbewegung des Kolbens 60 in den Hochdruckzylinderraum 92 gelangen. Damit ist eine automatische Entlüftung gewährleistet, welche bei jedem Schaltspiel, d. h. bei jedem Ein-und Auskupplungsvorgang der Kupplung wirksam wird. Eine spezielle Entlüftungsprozedur entfällt.

Ein Einschleppen von Kondenswasser oder Schmutz über die Luftzuführungsleitung 124 ist durch die Rollmembran 116 unterbunden.

Zwischen dem Hochdruckzylinderraum 92 und dem Druckmittelvorratsraum 112 kann ein By-pass vorgesehen sein, welcher bei einem Überdruck in dem Hochdruckzylinderraum 92 gegenüber dem Druckmittelvorratsraum 112 eine ständige Leckage in Richtung Druckmittelvorratsraum ermöglicht. Durch einen solchen By-pass kann verhindert werden, daß sich in dem Hochdruckzylinderraum 92 ein Überdruck aufbaut. Das Aufbauen eines solchen Überdrucks könnte dadurch geschehen, daß bei dynamischer Belastung der Kupplung während des Fahrbetriebs die Zugstange 24 und mit ihr die Führungsstange 48 und der Kolben 60 eine axiale Hin- und Herbewegung gegenüber dem Zylinder 76 ausführen. Eine solche Axialbewegung ist deshalb nicht ausgeschlossen, weil die Zugstange 24 durch die elastischen Körper 34 und 40 elastisch gegenüber dem Zugfahrzeug abgestützt ist, während die Hydraulikeinheit 72 starr an dem Zugstangenlager 26 abgestützt ist. Wenn nun eine solche Pumpwirkung eintritt, so kann unter ungünstigen Verhältnissen der Druck des hydraulischen Druckmittels in dem Hochdruckzylinderraum 92 über einen gewünschten Wert ansteigen. Ist nun der erwähnte By-pass vorhanden, so ist diese Gefahr ausgeschlossen. Es besteht aber andererseits auch keine Gefahr, daß der Hochdruckzylinderraum 92 sich in unzulässiger Weise über den By-pass entleert, weil bei jedem Lastrichtungswechsel eine erneute Füllung des Hochdruckzylinderraums 92 über das Nachfüllventil 114 von dem Druckmittelvorratsraum 112 her stattfindet.

## Patentansprüche

1. Vorrichtung zum Aus- und Einschalten des Spiels zwischen den miteinander zu verbindenden Kupplungsteilen, z. B. Kupplungsbolzen (14) und Zugöse (18), einer Anhängerkupplung, umfassend einen in einem Zylinder (76) beweglichen Kolben (60) und einen von diesem Kolben (60) beaufschlagten Anlagekörper (50), welcher während des Fahrbetriebs unter der Wirkung des in einem gegen Abfluß gesperrten, gegebenenfalls jedoch gegen Überdruck gesicherten Hochdruckzylinderraum (92) enthaltenen, an dem Kolben (60) anliegenden hydraulischen Druckmittels die Kupplungsteile (14, 18) in spielfreier gegenseitiger Anlage hält, wobei der Kolben (60) inRichtung der Spielausschaltung antreibbar ist und der sich bei der Spielausschaltung vergrößernde Hochdruckzylinderraum (12) aus einer hydraulischen Druckmittelversorgung (112) nachfüllbar ist und wobei der Hochdruckzylinderraum (92) zur Freigabe des Anlagekörpers (50) entleerbar ist, dadurch gekennzeichnet, daß der Kolben (60) durch Druckgabe von der Druckmittelversorgung (112) her in Richtung der Spielausschaltung antreibbar ist.

2. Vorrichtung nach Anspruch 1, dadurch gekennzeichnet, daß die hydraulische Druckmittelversorgung (112) einen Druckmittelvorratsraum (112) umfaßt, der mit dem Hochdruckzylinderraum (92) zu dessen Nachfüllung und Entleerung verbindbar ist und daß der in diesem Druckmittelvorratsraum (112) herrschende Druck des hydraulischen Druckmittels von außen her beeinflußbar ist.

3. Vorrichtung nach Anspruch 2, dadurch gekennzeichnet, daß der in dem Druckmittelvorratsraum (112) herrschende Druck durch Beaufschlagung mit Druckluft beeinflußbar ist.

4. Vorrichtung nach Anspruch 3, dadurch gekennzeichnet, daß in dem Druckmittelvorratsraum (112) durch eine bewegliche Trennwand (116) getrennt eine Druckmittelkammer (112) und eine Luftkammer (120) vorgesehen sind, wobei die Luftkammer (120) an eine Druckluftversorgung (124) anschließbar ist.

5. Vorrichtung nach Anspruch 4, dadurch gekennzeichnet, daß die Trennwand (116) von einer Rollmembran (116) gebildet ist.

6. Vorrichtung nach Anspruch 5, dadurch gekennzeichnet, daß die Rollmembran (116) durch eine Führungseinrichtung (134, 136, 138, 140) geführt ist.

7. Vorrichtung nach einem der Ansprüche 2 bis 5, dadurch gekennzeichnet, daß zwischen dem Hochdruckzylinderraum (92) und dem Druckmittelvorratsraum (112) ein zum Hochdruckzylinderraum (92) hin öffnendes, gegebenenfalls in Schließrichtung vorgespanntes Nachfüllventil (126) vorgesehen ist.

8. Vorrichtung nach einem der Ansprüche 2 bis 7, dadurch gekennzeichnet, daß zwischen dem Hochdruckzylinderraum (92) und dem Druckmittelvorratsraum (112) ein gesteuertes Entleerungsventil (126) vorgesehen ist.

9. Vorrichtung nach Anspruch 8, dadurch gekennzeichnet, daß das Entleerungsventil (126) in zeitlichem Zusammenhang mit dem Druck in dem Druckmittelvorratsraum (112) gesteuert ist derart, daß bei Druckabbau in dem Druckmittelvorratsraum (112) das Entleerungsventil (126) öffnet.

10. Vorrichtung nach Anspruch 9, dadurch gekennzeichnet, daß das Entleerungsventil (126) durch den Druck des hydraulischen Druckmittels in dem Druckmittelvorratsraum (112) gesteuert ist.

11. Vorrichtung nach einem der Ansprüche 1 bis 10, dadurch gekennzeichnet, daß an den Hochdruckzylinderraum (92) ein erstes Überdruckventil (130) angeschlossen ist.

12. Vorrichtung nach Anspruch 11, dadurch gekennzeichnet, daß das erste Überdruckventil (130) zu dem Druckmittelvorratsraum (112) hin öffnet.

13. Vorrichtung nach einem der Ansprüche 2 bis 12, dadurch gekennzeichnet, daß an den Druckmittelvorratsraum (112) ein zweites Überdruckventil (132) angeschlossen ist.

14. Vorrichtung nach Anspruch 13, dadurch gekennzeichnet, daß das zweite Überdruckventil (132) an eine Druckluftversorgung (124) für den Druckmittelvorratsraum (112) angeschlossen ist.

15. Vorrichtung nach einem der Ansprüche 1 bis 14, dadurch gekennzeichnet, daß der Kolben (60) durch Rückstellmittel (150) entgegen der Richtung der Spielausschaltung vorgespannt ist.

16. Vorrichtung nach einem der Ansprüche 1 bis 15, dadurch gekennzeichnet, daß der Kolben (60) entgegen der Richtung der Spielausschaltung bis zur wenigstens annähernd vollständigen Entleerung des Hochdruckzylinderraums (92) zurückstellbar ist.

17. Vorrichtung nach einem der Ansprüche 1 bis 16, dadurch gekennzeichnet, daß zwischen dem Kolben (60) und dem Anlagekörper (50) ein Druckstab (62) angeordnet ist, welcher an beiden Enden mittels je eines Kugelgelenks (64, 66, 68, 70) an dem Kolben (60) bzw. dem Anlagekörper (50) angreift.

18. Vorrichtung nach einem der Ansprüche 1 bis 17, dadurch gekennzeichnet, daß der von dem Hochdruckzylinderraum (92) abgelegene Raum des den Kolben (60) aufnehmenden Zylinders (76) durch Abdeckmittel (80, 78) abgedeckt ist.

19. Vorrichtung nach Ansprüche 17 oder 18, dadurch gekennzeichnet, daß der Druckstab (62) an dem Zylinder (76) durch die Axialbewegung des Druckstabs (62) gestattende Stützmittel (78) annähernd in Achsrichtung des Kolbens (60) gehalten ist.

20. Vorrichtung nach einem der Ansprüche 17 bis 19, dadurch gekennzeichnet, daß der Zylinder (76) an seinem vom Hochdruckzylinderraum (92) abgelegenen Ende durch eine Kappe (80) abgedeckt ist, welche mit einem den Druckstab (62) stützenden und diesen schmutzdicht umschließenden Balgen (78) verbunden ist.

21. Vorrichtung nach einem der Ansprüche 1 bis 20, dadruch gekennzeichnet, daß zwischen dem Hochdruckzylinderraum (92) und der hydraulischen Druckmittelversorgung (112) eine Leckageverbindung besteht, insbesondere dann, wenn der Kupplungskörper (10) an dem Zugfahrzeug axial gefedert angebracht ist.

## Claims

1. A device for excluding and incorporating the clearance between the coupling parts, e.g. coupling bolt (14) and towing ring (18), of a trailer coupling which need to be connected to each other, comprising a piston (60) adapted for movement in a cylinder (76) and a bearing member (50) acted upon by this piston (60) and which, during travelling and, under the influence of the pressurised hydraulic medium which is applied against the piston (60) and which is contained in a high-pressure cylinder space (92) secured against discharge but possibly protected from over-pressure, maintains the coupling parts (14, 18) bearing on each other without clearance, the piston (60) being adapted to be driven in the direction of clearance exclusion, while the high-pressure cylinder space (12), enlarging during clearance exclusion, is topped up from a supply (112) of pressurised hydraulic medium while the high-pressure cylinder space (2) can be emptied in order to release the bearing member (5), characterised in that the piston (60) can be driven in the direction of clearance exclusion by the application of pressure from the pressurised medium supply source (112).

2. A device according to Claim 1, characterised in that the supply (112) of pressurised hydraulic medium comprises a pressurised medium storage space (112) adapted for connection to the high-pressure cylinder space (92) so that it can be topped up and emptied and in that the pressure of the hydraulic medium present in this storage space (112) can be influenced from outside.

3. A device according to Claim 2, characterised in that the pressure present in the pressurised medium storage space (112) can be influenced by an application of compressed air.

4. A device according to Claim 3, characterised in that there are in the pressurised medium storage space (112), separated by a movable partition (116), a pressurised medium chamber (112) and an air chamber (120), the air chamber (120) being adapted for connection to a compressed air supply (124).

5. A device according to Claim 4, characterised in that the partition (116) consists of a rolling diaphragm (116).

6. A device according to Claim 5, characterised in that the rolling diaphragm (116) is guided by a guide means (134, 136, 138, 140).

7. A device according to one of Claims 2 to 5, characterised in that between the high-pressure cylinder space (92) and the pressurised medium storage space (112) there is a top-up valve (126) which is open towards the high-pressure cylinder space (92) and is possibly biased in the direction of closure.

8. A device according to one of Claims 2 to 7, characterised in that between the high-pressure cylinder space (92) and the pressurised medium storage space (112) there is a controlled emptying valve (126).

9. A device according to Claim 8, characterised in that the emptying valve (126) is so controlled in a timed relationship with the pressure in the pressurised medium storage space (112) so that the emptying valve (126) opens when there is a drop in pressure in the pressurised medium storage space (112).

10. A device according to Claim 9, characterised in that the emptying valve (126) is controlled by the pressure of the pressurised hydraulic medium in the pressurised medium storage space (112).

11. A device according to one of Claims 1 to 10, characterised in that a first over-pressure valve (130) is connected to the high-pressure cylinder space (92).

12. A device according to Claim 11, characterised in that the first over-pressure valve (130) opens towards the pressurised medium storage space (112).

13. A device according to one of Claims 2 to 12, characterised in that a second over-pressure valve (132) is connected to the pressurised medium storage space (112).

14. A device according to Claim 13, characterised in that the second over-pressure valve (132) is connected to a compressed air supply (124) for the pressurised medium storage space (112).

15. A device according to one of Claims 1 to 14, characterised in that the piston (60) is biased by restoring means (150) against the direction of clearance exclusion.

16. A device according to one of Claims 1 to 15, characterised in that the piston (60) can be reset against the direction of clearance exclusion until the high-pressure cylinder space (92) is at least almost completely emptied.

17. A device according to one of Claims 1 to 16, characterised in that between the piston (60) and the bearing member (50) there is a compression member (62) which at both ends and by means of respective ball joints (64, 66, 68, 70), engages the piston (60) and bearing member (50).

18. A device according to one of Claims 1 to 17, characterised in that the space in the cylinder (76) which accommodates the piston (60) and which is remote from the high-pressure cylinder space (92) is covered by masking means (80, 78).

19. A device according to Claim 17 or 18, characterised in that the compression member (62) is supported on the cylinder (76) by bracing means (78) allowing the axial movement of the compression member (62), approximately in the axial direction of the piston (60).

20. A device according to one of Claims 17 to 19, characterised in that, at its end which is remote from the high-pressure cylinder space (92), the cylinder (76) is masked by a cap (80) which is connected to a bellows (78) which supports the compression member (62) and encloses it in a dirt-proof manner.

21. A device according to one of Claims 1 to 20, characterised in that between the high-pressure cylinder space (92) and the pressurised hydraulic medium supply (112) there is a leakage connection, particularly if the coupling member (10) is mounted on the tractor vehicle in an axially sprung fashion.

## Revendications

1. Dispositif destine à supprimer et à établir un jeu entre les pièces d'attelage à relier entre elles, par exemple le boulon d'attelage (14) et le crochet de traction (18), d'un attelage de remorque, comportant un piston (60) et un corps d'application (50), soumis à l'action de ce piston (60), lequel corps d'application maintient, pendant le fonctionnement, en application réciproque, sans jeu, les pièces d'attelage (14, 18), sous l'action du fluide hydraulique sous pression s'appliquant contre le piston (60), contenu dans une chambre de cylindre à haute pression (92) fermée de manière à ne pas permettre une évacuation, mais le cas échéant protégée contre une surpression, dans lequel le piston (60) peut être entraîné dans le sens de la suppression du jeu et la chambre de cylindre à haute pression (12), dont le volume augmente lors de la suppression du jeu, peut être remplie à partir d'une alimentation en fluide hydraulique sous pression (112) et dans lequel la chambre de cylindre à haute pression (92) peut être vidangée pour libérer le corps d'application (50), caractérisé en ce que le piston (60) peut être entraîné dans le sens de la suppression du jeu, sous l'effet de la pression fournie par l'alimentation en fluide sous pression (112).

2. Dispositif selon la revendication 1, caractérisé en ce que l'alimentation en fluide hydraulique sous pression (112) comporte une chambre de réserve de fluide sous pression (112) qui peut être reliée avec la chambre de cylindre à haute pression (92) en vue de son remplissage et de sa vidange et en ce que la pression du fluide hydraulique régnant dans cette chambre de réserve de fluide sous pression (112) peut être influencée de l'extérieur.

3. Dispositif selon la revendication 2, caractérisé en ce que la pression régnant dans la chambre de réserve de fluide sous pression (112) peut être influencée par une alimentation en air comprimé.

4. Dispositif selon la revendication 3, caractérisé en ce qu'il est prévu dans la chambre de réserve de fluide sous pression (112) une chambre de fluide sous pression (112) et une chambre d'air (120), séparées par une cloison (116) mobile, la chambre à air (120) pouvant être raccordée à une alimentation d'air comprimé (124).

5. Dispositif selon la revendication 4, caractérisé en ce que la cloison (116) est formée par une membrane à enroulement (116).

6. Dispositif selon la revendication 45, caractérisé en ce que la membrane à enroulement (116) est guidée par un dispositif de guidage (134, 136, 138, 140).

7. Dispositif selon l'une des revendications 2 à 5, caractérisé en ce qu'il est prévu, entre la chambre de cylindre à haute pression (92) et la chambre de réserve de fluide sous pression (112), une soupape de remplissage (126) s'ouvrant vers la chambre de cylindre à haute pression (92), éventuellement précontrainte dans le sens de la fermeture.

8. Dispositif selon l'une des revendications 2 à 7, caractérisé en ce qu'il est prévu une soupape de vidange (126) commandée, entre la chambre de cylindre à haute pression (92) et la chambre de réserve de fluide sous pression (112).

9. Dispositif selon la revendication 8, caractérisé en ce que la soupape de vidange (126) est commandée, dans une relation temporelle avec la pression régnant dans la chambre de réserve de fluide sous pression (112), de manière que la soupape de vidange (126) s'ouvre lorsque la pression baisse dans la chambre de réserve de fluide sous pression (112).

10. Dispositif selon la revendication 9, caractérisé en ce que la soupape de vidange (126) est commandée par la pression du fluide hydraulique dans la chambre de réserve de fluide sous pression (112).

11. Dispositif selon l'une des revendications 1 à 10, caractérisé en ce qu'une première soupape de surpression (130) est raccordée à la chambre de cylindre à haute pression (92).

12. Dispositif selon la revendication 11, caractérisé en ce que la première soupape de surpression (130) s'ouvre vers la chambre de réserve de fluide sous pression (112).

13. Dispositif selon l'une des revendications 2 à 12, caractérisé en ce qu'une seconde soupape de surpression (132) est raccordée à la chambre de réserve de fluide sous pression (112).

14. Dispositif selon la revendication 13, caractérisé en ce que la seconde soupape de surpression (132) est raccordée à une alimentation d'air comprimé (124) pour la chambre de réserve de fluide sous pression (112).

15. Dispositif selon l'une des revendications 1 à 14, caractérisé en ce que le piston (60) est précontraint par des moyens de rappel (150) dans le sens contraire à la suppression du jeu.

16. Dispositif selon l'une des revendications 1 à 15, caractérisé en ce que le piston (60) peut être rappelé dans le sens contraire à la suppression du jeu jusqu'à vidange au moins à peu près complète de la chambre de cylindre à haute pression (92).

17. Dispositif selon l'une des revendications 1 à 16, caractérisé en ce qu'il est prévu entre le piston (60) et le corps d'application (50), une barre de pression (62) qui agit, à chacune de ses deux extrémités, au moyen d'un joint sphérique (64, 66, 68, 70), sur le piston (60) ou le corps d'application (50).

18. Dispositif selon l'une des revendications 1 à 17, caractérisé en ce que le volume, éloigné de la chambre à haute pression (92), du cylindre (76) logeant le piston (60), est recouvert par des moyens de couverture (80, 78).

19. Dispositif selon les revendications 17 ou 18, caractérisé en ce que la barre de pression (62) est maintenue sur le cylindre (76), à peu près dans la direction axiale du piston (60), par des moyens d'appui (78) autorisant le déplacement axial de la barre de pression (62).

20. Dispositif selon l'une des revendications 17 à 19, caractérisé en ce que le cylindre (76) est recouvert, à son extrémité éloignée de la chambre de cylindre à haute pression (92), par un capuchon (80) qui est relié avec un soufflet (78) soutenant la barre de pression (62) et entourant celle-ci de manière à la protéger contre les impuretés.

21. Dispositif selon l'une des revendications 1 à 20, caractérisé en ce qu'il existe, entre la chambre de cylindre à haute pression (92) et l'alimentation de fluide hydraulique sous pression (112), une liaison de fuite, en particulier lorsque le corps d'attelage (10) est monté de manière élastique axialement sur le véhicule tracteur.
